# EUROPEAN PATENT SPECIFICATION

(11) **EP 4 276 827 B1**
(45) Date of publication and mention of the grant of the patent: **22.10.2025**
(21) Application number: 22750129.3
(22) Date of filing: 31.01.2022
(51) Int. Cl.: G10L 25/51, G10L 15/02, G10L 15/16, G09B 19/06, G10L 15/00, G10L 15/10, G10L 25/03, G10L 25/30

(54) **SPEECH SIMILARITY DETERMINATION METHOD, DEVICE AND PROGRAM PRODUCT**
VERFAHREN, VORRICHTUNG UND PROGRAMMPRODUKT ZUR BESTIMMUNG VON SPRACHÄHNLICHKEIT
PROCÉDÉ DE DÉTERMINATION DE SIMILARITÉ DE PAROLE, DISPOSITIF ET PRODUIT PROGRAMME

(30) Priority: 07.02.2021 CN 202110179824
(43) Date of publication of application: 15.11.2023
(73) Proprietor: Lemon Inc., Grand Cayman, KY1-1205 (KY)
(72) Inventor: XIA, Rui, Los Angeles, California 90066 (US); TU, Ming, Los Angeles, California 90066 (US); DING, Chen, Beijing 100190 (CN); ZHENG, Weiming, Beijing 100190 (CN)
(74) Representative: Marks & Clerk LLP
(86) International application number: PCT/SG2022/050048
(87) International publication number: WO 2022/169417

(56) References cited:
- CN-A- 104 732 977
- CN-A- 104 732 977
- CN-A- 104 882 147
- CN-A- 104 882 147
- CN-A- 105 989 842
- CN-A- 106 531 185
- CN-A- 106 782 609
- CN-A- 106 782 609
- CN-A- 106 847 260
- CN-A- 110 782 918
- CN-A- 111 108 552
- CN-A- 112 289 309
- US-A1- 2020 294 527

## Description

### TECHNICAL FIELD

Embodiments of the present disclosure relate to speech technology and, in particular, to a method and an apparatus for determining speech similarity, and a program product.

### BACKGROUND

Many users choose to learn language online, for example, using language learning software to learn a certain language.

Many language learning software in the prior art is provided with an analysis module functioned with similarity analysis of follow-up reading; and a user may read specified content, and software can analyze audio generated when the user reads the specified content, and determine similarity between the audio and a standard audio corresponding to the specified content, so that the user can get knowledge of the effect of follow-up reading.

However, the analysis module provided in the prior art only can analyze one type of language typically, and adding similarity analysis function of another type of language for follow-up reading will result in a relatively large volume of the analysis module and relatively high requirements for a hardware device running the analysis module.

CN104732977A discloses a method and a system of an on-line spoken language pronunciation quality evaluation. The method includes: receiving a test voice collected by a mobile client-side through a network; pre-processing a test voice received; extracting a voice feature parameter of the preprocessed test voice to obtain a feature parameter of the test voice; according to the feature parameter of the test voice and a
feature parameter of a standard voice, evaluating the test voice to obtain an evaluation result; feeding back the evaluation result to the mobile client-side through the network, and showing the evaluation result through the mobile client-side. According to the present method, the on-line, convenient and accurate spoken language pronunciation quality evaluation can be achieved.

CN106531185A discloses a method and system of a voice evaluation based on voice similarity and the method, including: providing a training data set; using the training data set to algorithm train the dynamic time regularization algorithm and the support vector sequential regression algorithm to obtain a similarity scoring model; providing a reference voice information; recording, mocking and reading the mocked voice information of the reference voice information; extracting a set of reference voice feature sequences in the reference voice information and a set of mocked voice feature sequences in the mocked voice information; and inputting the set of reference voice feature sequences in the reference voice information and the set of mocked voice feature sequences in the mocked voice information into the similarity scoring model to obtain and output the similarity scoring value between the mocked voice information and the reference voice information. On the basis of evaluating the correctness of sound, the similarity evaluation method of the present invention is added by the evaluation of the mocking degree of speech so as to assist a user to accomplish targeted mocking practice and improve their speech level.

CN106782609A discloses a method of spoken language comparison including: setting a standard text, acquiring standard voice feature of the standard text, and storing the standard voice feature into a database; acquiring a user voice data when the user reads the standard text, and extracting a user voice feature in the user voice data; aligning the user voice feature to the standard voice feature, and comparing the user voice feature with the standard voice feature and storing the user voice feature and a comparison result into the database. The user can learn that which terms of own spoken language are inaccurate with standard spoken language, so that language learning convenience is brought for a leamer, foreign language learning efficiency is improved, and learning interest of the user is increased.

CN104882147A discloses a method, a device and a system for displaying a singing score. The method includes the following steps: acquiring a real-time audio inputted by a sound acquisition device; acquiring a voiceprint similarity of the real-time audio relative to a song, displaying a standard voiceprint column of the song in an overlapped mode on a display screen, and filling the corresponding voiceprint columns according to the song progress and the voiceprint similarity. According to the invention, the corresponding voiceprint column is filled through different voiceprint similarity, the voiceprint similarity of the current singing and an original singer of the song is displayed simply and clearly, thereby being convenient for a user to see the voiceprint similarity of the own singing and the original singer in real time.

CN110782918A discloses a method, an equipment, a device and a storage medium of voice rhythm evaluation based on artificial intelligence, electronic. The method comprises: receiving a to-be-evaluated voice data and a text data corresponding to the to-be-evaluated voice data; determining rhythm standards of pronunciation corresponding to the text data; performing rhythm detection processing on the to-be-evaluated voice data to obtain pronunciation feature and rhythm feature of the to-be-evaluated voice data; comparing the pronunciation feature with corresponding standard pronunciation feature in the rhythm standards to obtain a pronunciation feature evaluation result, and comparing the rhythm feature with corresponding standard rhythm feature in the rhythm standards to obtain a rhythm feature evaluation result; and performing evaluation processing based on the pronunciation feature evaluation result and the rhythm feature evaluation result through a decision tree model to obtain a rhythm score of the to-be-evaluated voice data. According to the invention, the accurate rhythm score of the voice data can be obtained.

### SUMMARY

The invention is as defined by the appended claims.

### BRIEF DESCRIPTION OF DRAWINGS

In order to describe technical solutions in embodiments of the present disclosure or the prior art more clearly, the accompanying drawings used in the description of the embodiments or the prior art will be briefly described hereunder. Apparently, the drawings in the following description are intended for some embodiments of present disclosure. For persons of ordinary skill in the art, other drawings may be obtained based on these drawings without any creative effort.
FIG. 1 is an application scenario diagram according to an exemplary embodiment.
FIG. 2 is a flowchart of a method for determining speech similarity based on speech interaction according to an exemplary embodiment of the present application.
FIG. 3 is a flowchart of a method for determining speech similarity based on speech interaction according to another exemplary embodiment of the present application.
FIG. 4 is a schematic diagram of a process for determining similarity according to an exemplary embodiment of the present application.
FIG. 5 is a flowchart of a method for processing a data request instruction according to an exemplary embodiment of the present application.
FIG. 6 is a structural diagram of an apparatus for determining speech similarity based on speech interaction according to an exemplary embodiment of the present application.
FIG. 7 is a structural diagram of an apparatus for determining speech similarity based on speech interaction according to another exemplary embodiment of the present application.
FIG. 8 is a structural diagram of an apparatus for processing a data request instruction according to an exemplary embodiment of the present application.
FIG. 9 is a schematic structural diagram of hardware of an electronic device according to an embodiment of the present disclosure.

### DESCRIPTION OF EMBODIMENTS

In order to make objectives, technical solutions, and advantages of embodiments of the present disclosure clearer, the technical solutions in the embodiments of the present disclosure will be described hereunder clearly and comprehensively with reference to the accompanying drawings in the embodiments of the present disclosure. Apparently, the described embodiments are only some embodiments of the present disclosure, rather than all the embodiments. All other embodiments obtained by persons of ordinary skill in the art based on the embodiments of the present disclosure without any creative effort shall fall within the protection scope of the present disclosure.

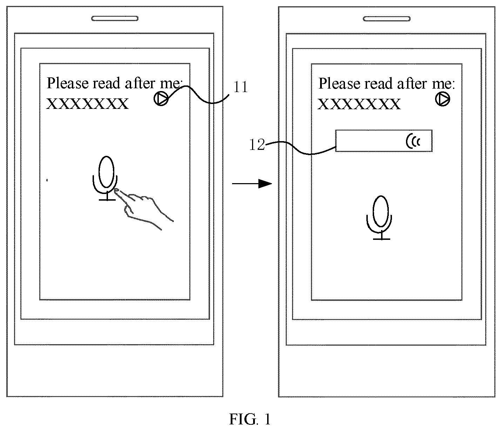

FIG. 1 is an application scenario diagram according to an exemplary embodiment.

As shown in FIG. 1, a user terminal can play an exemplary audio (in the figure, "XXX" represents contents of the exemplary audio), and a user can perform follow-up reading for the exemplary audio.

The user can click a key 11 to control the user terminal to record follow-up audio 12. The user terminal can analyze the recorded audio 12 to determine similarity thereof with the exemplary audio, so that the user can get knowledge of the effect of follow-up reading.

However, in the scheme provided in the prior art where an audio recorded during follow-up reading is analyzed to determine similarity, only audio in one type of language can be analyzed. For example, similarity analysis can be performed on only audio generated when the user performs follow-up reading by using Mandarin; and for another example, similarity analysis can be performed on only audio generated when the user performs follow-up reading by using English.

If, on the basis of the scheme provided in the prior art, a similarity analysis function for follow-up reading in other categories of languages is directly added, volume of an analysis module achieving the entire function will be large, and thus relatively high requirements will be placed on a hardware device running the analysis module.

For example, if there is a need to analyze audio recorded in different dialects for follow-up reading to determine similarity thereof with the exemplary audio, volume of the analysis module will be relatively large.

In order to address the aforementioned technical problem, according to the scheme provided in the present application, when analyzing a recorded evaluation audio, only an evaluation pronunciation feature corresponding to a standard pronunciation feature corresponding to an exemplary audio is extracted from the evaluation audio, so that the volume of the module functioned with similarity analysis of follow-up reading can be relatively small. Further, the exemplary audio is audio of specified content that is read in a specified language, and the standard pronunciation feature is used to reflect a specific pronunciation of the specified content in the specified language, therefore, according to the scheme of the present application, similarity between the evaluation audio and the exemplary audio can be determined according to the standard pronunciation feature and the extracted evaluation pronunciation feature, moreover, such implementation can be applied to exemplary audio with different specified contents and different specified languages, thereby capable of providing a similarity analysis function for follow-up reading in plural categories of languages.

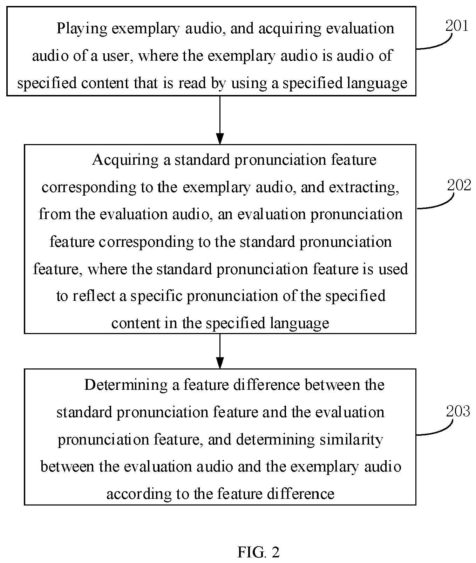

FIG. 2 is a flowchart of a method for determining speech similarity based on speech interaction according to an exemplary embodiment of the present application.

As shown in FIG. 2, the method for determining speech similarity based on speech interaction according to the present application includes the following steps.

Step 201, playing exemplary audio, and acquiring evaluation audio of a user, where the exemplary audio is audio of specified content that is read by using a specified language.

The method provided in the present application can be performed by an electronic device with computing power, and the electronic device may be, for example, a user terminal which may have a microphone. The user terminal may be, for example, a mobile phone, a tablet computer, or other device.

Specifically, the user terminal can play an exemplary audio, where the exemplary audio is audio of specified content that is read by using a specified language. For example, a section of literal content can be preset; and the literal content can be set as desired, which can be, for example, "Happy New Year". The audio of such content that is read in a specified language can be pre-recorded. For example, audio of such content that is read in Cantonese can be pre-recorded. The language particularly used can also be set as desired.

Further, the exemplary audio is audio which is used to provide reference to the user, and hence it is also possible to pre-record pieces of reference audio for specified content that is read in a specified language, and then screen exemplary audio meeting the requirement therefrom. For example, reference audio of "Happy New Year" that is read in Cantonese can be recorded under different circumstances using different devices.

In practical application, after the user terminal finishes playing the exemplary audio, a microphone can also be turned on so as to acquire evaluation audio of the user.

In one embodiment, a key for triggering acquisition of the evaluation audio can be provided in an interface of the user terminal, and the user can click the key to trigger the user terminal to turn on the microphone and acquire the evaluation audio.

In another implementation, the user terminal may turn on the microphone after finishing playing the exemplary audio, and acquire the evaluation audio.

The user can perform follow-up reading after listening to the exemplary audio, and particularly a specified language may be used to read specified content, so that the user terminal can acquire the evaluation audio generated when the user performs follow-up reading for the exemplary audio.

In an optional implementation, the user may also operate the user terminal, and transmit a follow-up reading completion instruction to the user terminal. For example, a key indicative of follow-up reading completion can be displayed in the interface of the user terminal, and the user can click the key to transmit the follow-up reading completion instruction. In another implementation, the user can long press a preset key when performing follow-up reading, and release the key for the follow-up reading after the follow-up reading is completed, so that the follow-up reading completion instruction is transmitted to the user terminal.

Optionally, the user terminal, when acquiring the evaluation audio, can also perform a detection thereto, so as to determine whether the user has finished the follow-up reading. For example, it can determined whether the user is still performing follow-up reading according to an energy value of the audio.

Step 202, acquiring a standard pronunciation feature corresponding to the exemplary audio, and extracting, from the evaluation audio, an evaluation pronunciation feature corresponding to the standard pronunciation feature, where the standard pronunciation feature is used to reflect a specific pronunciation of the specified content in the specified language.

Specifically, the user terminal can acquire a standard pronunciation feature corresponding to the exemplary audio.

Further, the standard pronunciation feature may be transmitted by a server to the user terminal, and the user terminal can store received standard pronunciation feature, and acquire the standard pronunciation feature when analyzing the evaluation audio. For example, when the user operates the user terminal to enable an application set with the method provided in the present application, the user terminal can interact with the server and request the server to transmit the exemplary audio and the standard pronunciation feature corresponding thereto to the user terminal.

In practical application, different pieces of exemplary audio also correspond to different standard pronunciation features, and the user terminal, when acquiring a standard pronunciation feature, can acquire the corresponding standard pronunciation feature according to an exemplary audio being played.

The standard pronunciation feature can be preset according to the specified content and the specified language, which can reflect a specific pronunciation of the specified content in the specified language.

Specifically, pieces of reference audio may be pre-recorded for the specified content that is read in the specified language, and any piece of the reference audio is used as the exemplary audio. Reference pronunciation features can be extracted for the each piece of reference, and the reference pronunciation features can characterize pronunciation features when the specified content is read in the specified language, and then these reference pronunciation features are fused to obtain the standard pronunciation feature corresponding to the exemplary audio, and the standard pronunciation feature has, fused therein, multiple reference pronunciation features, therefore, the standard pronunciation feature can characterize the specific pronunciation of the specified content in the specified language.

Further, the user terminal can also extract, from the evaluation audio, an evaluation pronunciation feature corresponding to the standard pronunciation feature. In this implementation, the evaluation pronunciation feature corresponding to the standard pronunciation feature can be extracted from the evaluation audio in a targeted way, without extracting all the features of the evaluation audio, thus the amount of data that needs to be processed can be reduced, and hardware requirements required when analyzing the evaluation audio can be lowered.

In an implementation, when extracting reference pronunciation features of each piece of reference audio, features of preset sampling points in each piece of reference audio can be collected, so that the standard pronunciation feature includes the features of these preset sampling points. When specified content is read in a specified language, the preset sampling points in the reference audio can be determined based on pronunciation positions characterized in that language.

**In** this implementation, the evaluation pronunciation feature corresponding to the standard pronunciation feature can be extracted from the evaluation audio according to the positions of the preset sampling points corresponding to the exemplary audio.

**In** another implementation, when extracting reference pronunciation features of each piece of reference audio, a preset category of features in each piece of reference audio can be collected, so that the standard pronunciation feature includes the preset category of features. When specified content is read in a specified language, the preset category of features in the reference audio can be determined based on features characterized in that language, which for example may be features representing a change of the overall tone, and which for another example may be features representing pronunciations of the entire text or part of the text.

**In** this implementation, the evaluation pronunciation feature corresponding to the standard pronunciation feature can be extracted from the evaluation audio according to the preset category of features corresponding to the exemplary audio.

Step 203, determining a feature difference between the standard pronunciation feature and the evaluation pronunciation feature, and determining similarity between the evaluation audio and the exemplary audio according to the feature difference.

The user terminal can also compare the standard pronunciation feature with the evaluation pronunciation feature, and then determine a feature difference between the standard pronunciation feature and the evaluation pronunciation feature. For example, a comparison can be made between a respective feature in the standard pronunciation feature and a respective feature in the evaluation pronunciation feature, and then the feature difference between the standard pronunciation feature and the evaluation pronunciation feature can be obtained.

For example, alignment processing can be performed between the standard pronunciation feature and the evaluation pronunciation feature, and the feature difference between the standard pronunciation feature and the evaluation pronunciation feature can be obtained through a comparison between a first feature in the standard pronunciation feature and a second feature in the evaluation pronunciation feature that are included in each alignment point.

Specifically, also, similarity between the evaluation audio and the exemplary audio can be determined according to the feature difference. For example, a feature distance between the standard pronunciation feature and the evaluation pronunciation feature can be determined according to the feature difference therebetween, and the feature distance can be used as the similarity between the evaluation audio and the exemplary audio.

The user terminal can also map the determined similarity to a score or evaluation content, and display the score, so that the user can get knowledge of the effect of follow-up reading. For example, a mapping relationship between similarity and a score or evaluation content can be set in advance, so that it is possible to determine the corresponding score or evaluation content according to the determined similarity.

The present application provides a method for determining speech similarity based on speech interaction, which includes: playing exemplary audio, and acquiring evaluation audio of a user, where the exemplary audio is audio of specified content that is read by using a specified language; acquiring a standard pronunciation feature corresponding to the exemplary audio, and extracting, from the evaluation audio, an evaluation pronunciation feature corresponding to the standard pronunciation feature, where the standard pronunciation feature is used to reflect a specific pronunciation of the specified content in the specified language; and determining a feature difference between the standard pronunciation feature and the evaluation pronunciation feature, and determining similarity between the evaluation audio and the exemplary audio according to the feature difference. In the scheme of the present application, the evaluation pronunciation feature corresponding to the standard pronunciation feature corresponding to the exemplary audio can be extracted from the evaluation audio, thereby achieving relatively small volume of a module functioned with similarity analysis of follow-up reading. Moreover, the standard pronunciation feature of the exemplary audio can reflect the specific pronunciation of the specified content in the specified language, so that the present scheme is able to provide a similarity analysis function for follow-up reading in plural categories of languages in case that there is a small computing volume.

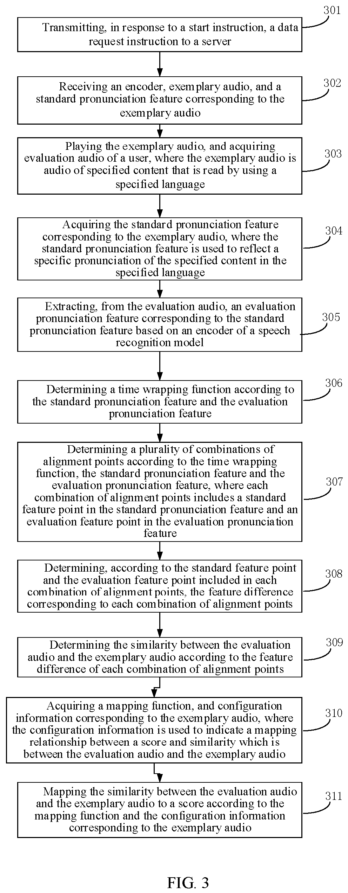

FIG. 3 is a flowchart of a method for determining speech similarity based on speech interaction according to another exemplary embodiment of the present application.

As shown in FIG. 3, the method for determining speech similarity based on speech interaction according the present application includes the following steps.

Step 301, transmitting, in response to a start instruction, a data request instruction to a server.

The method provided in the present application can be performed by an electronic device with computing power, and the electronic device may be, for example, a user terminal which may have a microphone. The user terminal may be, for example, a mobile phone, a tablet computer, or other device.

Specifically, a user may operate the user terminal and transmit a start instruction to the user terminal, where the start instruction is used to start a similarity analysis function for follow-up reading. For example, the similarity analysis function for follow-up reading can be provided in an application, as a prop in the application, and the application can be provided in the user terminal. Then, the user may operate the user terminal to start the application, and select the prop in the application with the similarity analysis function for follow-up reading, to transmit the start instruction to the user terminal.

Further, the user terminal can respond to the start instruction, and transmit a data request instruction to the server. The data request instruction is used to request data implementing the similarity analysis function for follow-up reading.

Step 302, receiving an encoder, exemplary audio, and a standard pronunciation feature corresponding to the exemplary audio.

In practical application, after receiving the data request instruction transmitted by the user terminal, the server can issue an encoder, an exemplary audio, and a standard pronunciation feature corresponding to the exemplary audio to the user terminal.

The server is pre-set with the encoder, the exemplary audio, and the standard pronunciation feature corresponding to the exemplary audio.

Specifically, the encoder transmitted by the server to the user terminal can be obtained through pre-training.

Further, speech recognition data can be used to train an initial model to obtain a speech recognition model. Then, the encoder in the speech recognition model is trained using pieces of audio in plural categories of languages, to obtain the encoder configured to extract a pronunciation feature.

In practical application, the speech recognition data can be audio data with text labels, and the speech recognition model obtained by training the speech recognition data can process a section of audio data, to obtain textual content corresponding to the audio data.

The speech recognition model includes an encoder, and the encoder can effectively extract text and pronunciation-related information, therefore, in the method according to the present application, the encoder capable of extracting a pronunciation feature can be obtained by training the encoder in the speech recognition model using audio data in plural categories of languages.

The audio data in plural categories of languages includes pieces of audio in plural categories of languages, and each piece of audio also has a language category label. For example, if a language used in a section of audio is Sichuan dialect, the language category label for the audio is a label representing Sichuan dialect. For another example, if a language used in a section of audio is Cantonese, the language category label for the audio is a label representing Cantonese. Training an encoder with audio data in plural categories of languages can improve differentiation by the encoder for pronunciation features in different categories of languages.

In order to further reduce hardware resources required by the method provided in the present application, the encoder may use a three-layer long short-term memory network, each layer of the network can be provided with 512 nodes.

Specifically, the server can be provided with several pieces of exemplary audio and standard feature information corresponding thereto, and transmit any one or more pieces of the pieces of exemplary audio to the user terminal, and issue the standard feature information corresponding to the exemplary audio.

Further, the standard pronunciation feature corresponding to the exemplary audio is obtained by fusing a plurality of reference pronunciation features, each reference pronunciation feature is obtained by using the encoder to extract a feature from each piece of reference audio, each piece of the reference audio is audio of the specified content that is read in the specified language, and the exemplary audio is any piece of audio of the reference audio.

In this implementation, multiple pieces of reference audio may be pre-recorded for the specified content that are read in the specified language. Then the encoder is used to perform feature extraction on each piece of reference audio to obtain a reference pronunciation feature corresponding thereto. Then respective reference pronunciation features are fused to obtain the standard pronunciation feature.

Since the reference audio is used to generate the standard pronunciation feature, the reference audio can be recorded by a user who use the specified language as a daily communication language, so that the standard pronunciation feature can accurately reflect the characteristic(s) of the specified language.

Step 303, playing the exemplary audio, and acquiring evaluation audio of a user, where the exemplary audio is audio of specified content that is read by using a specified language.

Specifically, after receiving exemplary audio, the user terminal can play any piece of the exemplary audio.

Step 303 is implemented using similar manners and principles as Step 201, which will not be described again.

Optionally, the specified content corresponding to the exemplary audio can also be displayed in a user interface of the user terminal, which is used to prompt the user of contents that need for follow-up reading.

After finishing playing the exemplary audio, the user terminal can also play speech content for prompting the user to perform follow-up reading, e.g., "Please read after me". Optionally, after finishing playing the prompt content, the user terminal can also turn on a microphone to acquire evaluation audio of the user.

Optionally, the user terminal can also be provided with a camera, so that a user image can be acquired and displayed in the user terminal. In an optional implementation, the user terminal can identify the user image, thereby determining whether the user has finished follow-up reading.

Step 304, acquiring the standard pronunciation feature corresponding to the exemplary audio, where the standard pronunciation feature is used to reflect a specific pronunciation of the specified content in the specified language.

Step 304 is implemented using similar manners and principles as Step 202 in terms of acquiring the standard pronunciation feature, which will not be described again.

Step 305, extracting, from the evaluation audio, an evaluation pronunciation feature corresponding to the standard pronunciation feature based on an encoder of a speech recognition model.

Further, the encoder of the speech recognition model transmitted by the server can be used by the user terminal, to extract, from the evaluation audio, an evaluation pronunciation feature corresponding to the standard pronunciation feature.

**In** practical application, the user terminal can input the evaluation audio into the encoder, to obtain the evaluation pronunciation feature corresponding to the standard pronunciation feature.

The encoder can distinguish pronunciation features in different categories of languages, and hence the encoder can extract, from the evaluation audio, the evaluation pronunciation feature corresponding to a language category. In addition, the standard pronunciation feature corresponding to the exemplary audio is also acquired using the encoder, therefore, by processing the evaluation audio using the same encoder, the evaluation pronunciation feature corresponding to the standard pronunciation feature can be obtained.

Specifically, the evaluation pronunciation feature corresponding to the standard pronunciation feature can be extracted by the encoder from the evaluation audio, and the evaluation pronunciation feature corresponding to the standard pronunciation feature can be extracted from the evaluation audio in a targeted way, without extracting all the features of the evaluation audio, thus the amount of data that needs to be processed can be reduced, and hardware requirements required when analyzing the evaluation audio can be lowered.

Step 306, determining a time wrapping function according to the standard pronunciation feature and the evaluation pronunciation feature.

Further, since audio is data with a timing sequence, the standard pronunciation feature corresponding to the exemplary audio also has a temporal attribute, and the evaluation pronunciation feature extracted from the evaluation data also has a temporal attribute. Therefore, a time wrapping function can be determined according to the standard pronunciation feature and the evaluation pronunciation feature, and the time wrapping function can represent a temporal correspondence between the standard pronunciation feature and the evaluation pronunciation feature.

In an implementation, a time wrapping function can be determined to nonlinearly map a time axis of the evaluation pronunciation feature to a time axis of the standard pronunciation feature, so that the evaluation pronunciation feature and the standard pronunciation feature are aligned in terms of the time axes. The aligned standard pronunciation feature has a first feature corresponding to an alignment point, and the aligned evaluation pronunciation feature has a second feature corresponding to an alignment point. There is a certain feature difference between the first feature corresponding to each alignment point and the second feature corresponding to each alignment point, and the time wrapping function can fulfill a minimal sum of feature differences corresponding to respective alignment points.

In practical application, the time wrapping function meeting the above-described condition can be determined by the user terminal according to the standard pronunciation feature and the evaluation pronunciation feature.

Step 307, determining a plurality of combinations of alignment points according to the time wrapping function, the standard pronunciation feature and the evaluation pronunciation feature, where each combination of alignment points includes a standard feature point in the standard pronunciation feature and an evaluation feature point in the evaluation pronunciation feature.

After determining the time wrapping function, the user terminal can determine a plurality of combinations of alignment points based on the current time wrapping function, the standard pronunciation feature and the evaluation pronunciation feature, where each combination of alignment points includes a standard feature point in the standard pronunciation feature and an evaluation feature point in the evaluation pronunciation feature, and the standard feature point and the evaluation feature point in the combination of alignment points correspond to a same time point.

Step 308, determining, according to the standard feature point and the evaluation feature point included in each combination of alignment points, the feature difference corresponding to each combination of alignment points.

Specifically, for each combination of alignment points, the feature difference between the standard feature point and the evaluation feature point in the combination of alignment points can be determined. For example, a distance between the standard feature point and the evaluation feature point can be calculated as the feature difference of the combination of alignment points.

Step 309, determining the similarity between the evaluation audio and the exemplary audio according to the feature difference of each combination of alignment points.

Further, a sum of feature differences of respective combinations of alignment points may be used as the similarity between the evaluation audio and the exemplary audio. By means of feature point alignment followed by feature comparison, the feature difference between the evaluation audio and the exemplary audio can be accurately determined, thereby accurately determining the similarity therebetween.

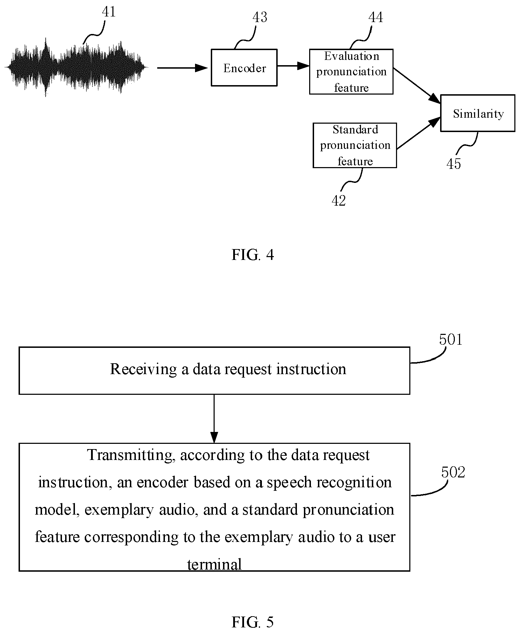

FIG. 4 is a schematic diagram of a process for determining similarity according to an exemplary embodiment of the present application.

As shown in FIG. 4, the user terminal can acquire evaluation audio 41, and can also acquire a standard pronunciation feature 42 corresponding to exemplary audio.

The user terminal inputs the evaluation audio 41 into an encoder 43, and the encoder 43 may output an evaluation pronunciation feature 44 of the evaluation audio 41 corresponding to the standard pronunciation feature 42. In an implementation, the evaluation audio 41 can be directly input into the encoder 43. In another implementation, the evaluation audio 41 also may be filtered first, and then the filtered audio is input into the encoder 43. For example, a Mel-filter bank can be used to process the evaluation audio 41.

The user terminal can also compare the standard pronunciation feature 42 with the evaluation pronunciation feature 44 to obtain similarity 45 between the evaluation audio 41 and the exemplary audio.

Step 310, acquiring a mapping function, and configuration information corresponding to the exemplary audio, where the configuration information is used to indicate a mapping relationship between a score and similarity which is between the evaluation audio and the exemplary audio.

Step 311, mapping the similarity between the evaluation audio and the exemplary audio to a score according to the mapping function and the configuration information corresponding to the exemplary audio.

In practical application, the user terminal can also acquire a mapping function, and configuration information corresponding to the exemplary audio.

In an optional implementation, the mapping function, and the configuration information corresponding to the exemplary audio may be issued by the server, so that the user terminal can acquire these pieces of information. For example, when transmitting the exemplary audio to the user terminal, the server can also issue the configuration information corresponding to the exemplary audio simultaneously, and can also issue the mapping function simultaneously.

The user terminal can store the received mapping function and the received configuration information corresponding to the exemplary audio, and acquire these pieces of information when mapping the similarity to a score.

If the server transmits pieces of exemplary audio to the user terminal, the server can also transmit configuration information corresponding to the each piece of exemplary audio to the user terminal.

Specifically, configuration information is used to indicate a mapping relationship between a score and similarity which is between the evaluation audio and the exemplary audio. For example, the configuration information can include several scores, and can also include a mapping relationship corresponding to the respective scores. Based on the configuration information, the mapping function can map the determined similarity to a score.

Further, the configuration information may also include a maximum score, similarity corresponding to the maximum score, a minimum score, and similarity corresponding to the minimum score. For example, the maximum score can be 100 and the minimum score can be 0.

In practical application, the mapping function may be a linear function, and the determined similarity can be mapped to a score through the linear function, the maximum score, the similarity corresponding to the maximum score, the minimum score and the similarity corresponding to the minimum score. By means of mapping similarity to a score through the linear function, the amount of data to be processed can be further reduced, thereby further lowering hardware requirements of the user terminal for performing the method provided in the present application.

The method provided in the present application is provided with configuration information corresponding to different pieces of exemplary audio, and the configuration information includes a maximum score and a minimum score. Maximum scores in respective pieces of configuration information may be set to a same value, such as 100; and minimum scores in respective pieces of configuration information may be set to a same value, such as 0, so that similarity can be mapped to a score range in a same scale according to the scheme provided in the present application.

Specifically, the user terminal can also display the determined score, so that the user can get knowledge of the effect of follow-up reading.

Further, the similarity corresponding to the maximum score is an average value of multiple pieces reference similarity, and each piece of reference similarity is similarity between each reference pronunciation feature and the standard pronunciation feature.

In practical application, a corresponding reference pronunciation feature can be extracted for each piece of reference audio, and the encoder can be used to extract the reference pronunciation feature of the reference audio. The reference similarity between each reference pronunciation feature and the standard pronunciation feature can be determined, for example, the reference similarity between each reference pronunciation feature and the standard pronunciation feature can be determined according to a dynamic time wrapping algorithm. An average value of the pieces of reference similarity is then determined as the similarity corresponding to the maximum score.

The similarity corresponding to the minimum score is an average value of multiple pieces of white noise similarity, each piece of white noise similarity is similarity between each white noise feature and the standard pronunciation feature, and each white noise feature is obtained by using the encoder to extract a feature from each piece of preset white noise audio.

Specifically, several pieces of white noise audio can also be prepared in advance to determine the similarity corresponding to the minimum score according to the several pieces of white noise audio. The encoder can be used to extract the white noise feature of each piece of white noise audio, and then the white noise similarity between each white noise feature and the standard pronunciation feature is determined, and then an average value of multiple pieces of white noise similarity is taken as the similarity corresponding to the minimum value.

FIG. 5 is a flowchart of a method for processing a data request instruction according to an exemplary embodiment of the present application.

As shown in FIG. 5, the method for processing a data request instruction according to the present application includes the following steps.

Step 501, receiving a data request instruction.

Step 502, transmitting, according to the data request instruction, an encoder based on a speech recognition model, an exemplary audio, and a standard pronunciation feature corresponding to the exemplary audio to a user terminal.

The exemplary audio is an audio of specified content that is read in a specified language, and the encoder is configured to extract, from an evaluation audio, an evaluation pronunciation feature corresponding to the standard pronunciation feature, where the standard pronunciation feature is used to reflect a specific pronunciation of the specified content in the specified language.

The method provided in the present application may be applied on the side of a server, and the server may provide data to the user terminal.

Specifically, the user terminal can transmit a data request instruction to the server based on a user operation. The server is provided with an encoder, exemplary audio, and a standard pronunciation feature corresponding to the exemplary audio as described in the embodiments shown in FIG. 2 or FIG. 3, and after receiving the data request instruction transmitted by the user terminal, the server feeds back the encoder, the exemplary audio, and the standard pronunciation feature corresponding to the exemplary audio to the user terminal.

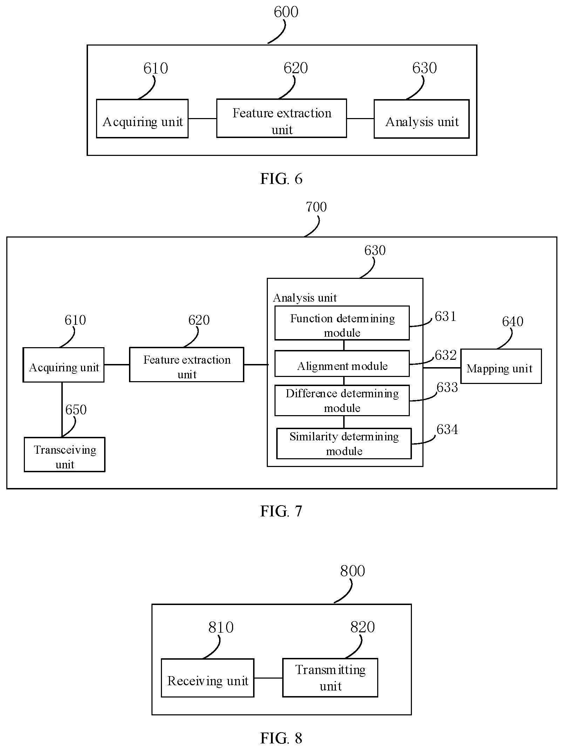

FIG. 6 is a structural diagram of an apparatus for determining speech similarity based on speech interaction according to an exemplary embodiment of the present application.

As shown in FIG. 6, the apparatus 600 for determining speech similarity based on speech interaction according to the present application includes:
an acquiring unit 610, configured to play exemplary audio, and acquire evaluation audio of a user, where the exemplary audio is audio of specified content that is read by using a specified language;
a feature extraction unit 620, configured to acquire a standard pronunciation feature corresponding to the exemplary audio, and extract, from the evaluation audio, an evaluation pronunciation feature corresponding to the standard pronunciation feature, where the standard pronunciation feature is used to reflect a specific pronunciation of the specified content in the specified language; and
an analysis unit 630, configured to determine a feature difference between the standard pronunciation feature and the evaluation pronunciation feature, and determine similarity between the evaluation audio and the exemplary audio according to the feature difference.

The apparatus for determining speech similarity based on speech interaction according to the present application is similar to the embodiments shown in FIG. 2, and will not be described again.

FIG. 7 is a structural diagram of an apparatus for determining speech similarity based on speech interaction according to another exemplary embodiment of the present application.

As shown in FIG. 7, the feature extraction unit 620 in the apparatus 700 for determining speech similarity based on speech interaction according to the present application is specifically configured to:
extract, from the evaluation audio, the evaluation pronunciation feature corresponding to the standard pronunciation feature based on an encoder of a speech recognition model.

The standard pronunciation feature corresponding to the exemplary audio is obtained by fusing a plurality of reference pronunciation features, each reference pronunciation feature is obtained by using the encoder to extract a feature from each piece of reference audio, a respective piece of reference audio is audio of the specified content that is read by using the specified language, and the exemplary audio is any piece of audio of the reference audio.

Optionally, the analysis unit 630 includes:
a function determining module 631, configured to determine a time wrapping function according to the standard pronunciation feature and the evaluation pronunciation feature;
an alignment module 632, configured to determine a plurality of combinations of alignment points according to the time wrapping function, the standard pronunciation feature and the evaluation pronunciation feature, where each combination of alignment points includes a standard feature point in the standard pronunciation feature and an evaluation feature point in the evaluation pronunciation feature;
a difference determining module 633, configured to determine, according to the standard feature point and the evaluation feature point included in each combination of alignment points, the feature difference corresponding to each combination of alignment points; and
a similarity determining module 634, configured to determine the similarity between the evaluation audio and the exemplary audio according to the feature difference of each combination of alignment points.

Optionally, the apparatus further includes a mapping unit 640 configured to:
acquire a mapping function, and configuration information corresponding to the exemplary audio, where the configuration information is used to indicate a mapping relationship between a score and similarity which is between the evaluation audio and the exemplary audio; and
map the similarity between the evaluation audio and the exemplary audio to a score according to the mapping function and the configuration information corresponding to the exemplary audio.

Optionally, the configuration information includes a maximum score, similarity corresponding to the maximum score, a minimum score, and similarity corresponding to the minimum score.

Optionally, the similarity corresponding to the maximum score is an average value of multiple pieces of reference similarity, and each piece of reference similarity is similarity between each reference pronunciation feature and the standard pronunciation feature.

Optionally, the similarity corresponding to the minimum score is an average value of multiple pieces of white noise similarity, each piece of white noise similarity is similarity between each white noise feature and the standard pronunciation feature, and each white noise feature is obtained by using the encoder to extract a feature from each piece of preset white noise audio.

Optionally, the apparatus further includes a transceiving unit 650 which, before the acquiring unit 610 plays the exemplary audio, is configured to:
transmit, in response to a start instruction, a data request instruction to a server; and
receive the encoder, the exemplary audio, the standard pronunciation feature corresponding to the exemplary audio.

Optionally, the speech recognition model is obtained by performing training on an initial model using speech recognition data; and
the encoder for extracting the pronunciation feature is obtained by performing training on the encoder in the speech recognition model using audio data in plural categories of languages.

Optionally, the encoder is a three-layer long short-term memory network.

The apparatus for determining speech similarity based on speech interaction according to the present application is similar to the embodiments shown in FIG. 3, and will not be described again.

FIG. 8 is a structural diagram of an apparatus for processing a data request instruction according to an exemplary embodiment of the present application.

As shown in FIG. 8, the apparatus 800 for processing a data request instruction according to the present application is disposed in a server. The apparatus includes:
a receiving unit 810, configured to receive the data request instruction; and
a transmitting unit 820, configured to transmit, according to the data request instruction, an encoder based on a speech recognition model, an exemplary audio, and a standard pronunciation feature corresponding to the exemplary audio to a user terminal;
where the exemplary audio is audio of specified content that is read by using a specified language, and the encoder is used to extract, from evaluation audio, an evaluation pronunciation feature corresponding to the standard pronunciation feature, where the standard pronunciation feature is used to reflect a specific pronunciation of the specified content in the specified language.

The apparatus for processing a data request instruction according to the present application is similar to the embodiments shown in FIG. 5, and will not be described again.

The present application further provides a computer program product, including a computer program, where the computer program, when being executed by a processor, implements the technical solution according to any one of method embodiments.

The present application further provides a computer program which, when being executed by a processor, implements the technical solution according to any one of method embodiments.

The apparatus provided in the embodiments can be used to perform the technical solutions in the foregoing method embodiments, and is implemented using similar principles and producing similar technical effects, which will not be described herein again in the embodiments.

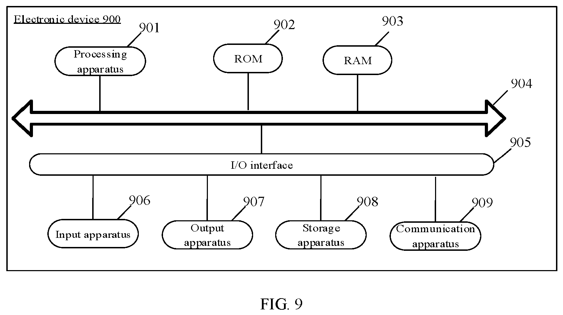

Reference is made to FIG. 9, which shows a schematic structural diagram of an electronic device 900 adaptable to implementing the embodiments of the present disclosure. The electronic device 900 may be a terminal device or a server. The terminal device may include, but is not limited to: a mobile terminal, such as a mobile phone, a notebook computer, a digital broadcast receiver, a personal digital assistant (PDA), a portable android device ( PAD), a portable multimedia player (PMP), and a vehicle-mounted terminal (such as vehicle-mounted navigation terminal); and a fixed terminal, such as a digital TV, and a desktop computer. The electronic device shown in FIG. 9 is merely an example, which should not impose any restrictions on functionalities and application scope of the embodiments of the present disclosure.

As shown in FIG. 9, the electronic device 900 may include a processing apparatus (such as a central processor, and a graphics processor) 901, which may perform various appropriate actions and processes according to a program stored in a read only memory (ROM) 902 or a program loaded into a random access memory (RAM) 903 from a storage apparatus 908. In the RAM 903, various programs and data required for operations of the electronic device 900 are also stored. The processing apparatus 901, the ROM 902 and the RAM 903 are connected to each other through a bus 904. An input/output (I/O) interface 905 is also connected to the bus 904.

Generally, the following apparatuses may be connected to the I/O interface 905: an input apparatus 906, including, for example, a touch screen, a touch pad, a keyboard, a mouse, a camera, a microphone, an accelerometer, or a gyroscope; an output apparatus 907, including, for example, a liquid crystal display (LCD), a speaker, or a vibrator; a storage apparatus 908, including, for example, a magnetic tape, or a hard disk; and a communication apparatus 909. The communication apparatus 909 may enable the electronic device 900 to perform wireless or wire communication with other devices for data exchange. Although FIG. 9 shows an electronic device 900 with various apparatuses, comprehensibly, there is no such requirement that all the apparatuses shown should be implemented or provided. Alternatively, more or fewer apparatuses may be implemented or provided.

In particular, according to an embodiment of the present disclosure, the process described above with reference to the flowchart may be implemented as a computer software program. For example, an embodiment of the present disclosure includes a computer program product, which includes a computer program carried on a computer readable medium, and the computer program contains a program code for executing the method shown in the flowchart. In such an embodiment, the computer program may be downloaded and installed from the network through the communication apparatus 909, or installed from the storage apparatus 908, or installed from the ROM 902. When the computer program is executed by the processing apparatus 901, the above-mentioned functions defined in the method of the embodiment of the present disclosure are executed.

It should be noted that, the above-mentioned computer readable medium in the present disclosure may be a computer readable signal medium or a computer readable storage medium or a combination of the both. The computer readable storage medium may be, for example, but not limited to, an electrical, a magnetic, an optical, an electromagnetic, an infrared, or a semiconductor system, apparatus or device, or any combination of the above. More specific examples of the computer readable storage medium may include, but are not limited to: an electrical connection with one or more wires, a portable computer disk, a hard disk, a random access memory (RAM), a read only memory (ROM), an erasable programmable read only memory (EPROM; or a flash memory), an optical fiber, a portable compact disc read-only memory (CD-ROM), an optical storage device, a magnetic storage device, or any suitable combination of the above. In the present disclosure, a computer readable storage medium may be any tangible medium that contains or stores a program, and the program may be used by or in combination with an instruction executive system, apparatus, or device. In the present disclosure, a computer readable signal medium may include a data signal propagated in a baseband or as a part of a carrier wave, and a computer readable program code is carried therein. This propagated data signal may adopt many forms, including but not limited to, an electromagnetic signal, an optical signal, or any suitable combination of the above. The computer readable signal medium may also be any computer readable media other than the computer readable storage medium, and the computer readable signal medium may send, propagate, or transmit the program used by or in combination with the instruction executive system, apparatus, or device. The program code contained on the computer readable medium may be transmitted by any suitable medium, including but not limited to: a wire, an optical cable, a radio frequency (RF), etc., or any suitable combination of the above.

The above-mentioned computer readable medium may be included in the above-mentioned electronic device; or it may exist alone without being assembled into the electronic device.

The above-mentioned computer readable medium carries one or more programs, and when the above-mentioned one or more programs are executed by the electronic device, the electronic device is caused to execute the method shown in above embodiments.

The computer program code used to perform operations of the present disclosure may be written in one or more programming languages or a combination thereof. The above-mentioned programming languages include object-oriented programming languages -- such as Java, Smalltalk, C++, and also include conventional procedural programming languages -- such as "C" language or similar programming languages. The program code may be executed entirely on a computer of a user, partly on a computer of a user, executed as an independent software package, partly executed on a computer of a user and partly executed on a remote computer, or entirely executed on a remote computer or a server. In a case where a remote computer is involved, the remote computer may be connected to the computer of the user through any kind of network -- including a local area network (LAN) or a wide area network (WAN), or, it may be connected to an external computer (for example, use an Internet service provider to connect via the Internet).

The flowcharts and block diagrams in the drawings illustrate possible implementation architecture, functions, and operations of the system, method, and computer program product in accordance with the embodiments of the present disclosure. At this point, each block in the flowchart or the block diagram may represent a module, a program segment, or a part of code, and the module, the program segment, or the part of code contains one or more executable instructions for implementing a specified logical function. It should also be noted that, in some alternative implementations, the functions marked in the blocks may also occur in a different order from the order marked in the drawings. For example, two blocks shown one after another may actually be executed substantially in parallel, or sometimes may be executed in a reverse order, which depends on the functions involved. It should also be noted that, each block in the block diagram and/or flowchart, and a combination of the blocks in the block diagram and/or flowchart, may be implemented by a dedicated hardware-based system that performs the specified functions or operations, or may be implemented by a combination of dedicated hardware and computer instructions.

The units involved in the embodiments described in the present disclosure may be implemented by means of software or hardware. Where a name of the unit does not constitute a limitation on the unit itself in some cases For example, the acquiring unit can also be described as "a unit acquiring evaluation audio of a user.

The above functions described herein may be performed at least in part by one or more hardware logic components. For example, non-restrictively, exemplary types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the present disclosure, a machine readable medium may be a tangible medium that may contain or store programs for use by or in combination with an instruction executive system, apparatus or device. The machine readable medium may be a machine readable signal medium or a machine readable storage medium. The machine readable medium may include, but is not limited to, an electronic, a magnetic, an optical, an electromagnetic, an infrared, or a semiconductor system, apparatus or device, or any suitable combination of the above. More specific examples of the machine readable storage medium will include an electrical connection based on one or more lines, a portable computer disk, a hard disk, a random access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination of the above.

The above description is only preferred embodiments of the present disclosure and an illustration of the applied technical principles. Those skilled in the art should understand that, the disclosure scope involved in the present disclosure is not limited to the technical solutions formed by the specific combination of the above technical features, but also covers other technical solutions formed by the arbitrary combination of the above technical features without departing from the above disclosure concept, for example, a technical solution formed by replacing the above features with technical features with similar functions disclosed (but not limited to) in the present disclosure.

In addition, although each operation is described in a specific order, this should not be understood as requiring these operations to be performed in the specific order or in a sequential order shown. Under certain circumstances, multitasking and parallel processing may be advantageous. Similarly, although several specific implementation details are included in the above discussion, these should not be interpreted as limiting the scope of the present disclosure. Certain features described in the context of a single embodiment may also be implemented in combination in the single embodiment. Conversely, various features described in the context of a single embodiment may also be implemented in multiple embodiments individually or in any suitable sub combination.

Although the subject matter has been described in a language specific to structural features and/or method logical actions, it should be understood that the subject matter defined in the appended claims is not limited to the specific features or actions described above. On the contrary, the specific features and actions described above are only exemplary forms for implementing the claims.

## Claims

1. A language learning method for determining speech similarity based on speech interaction, comprising:
playing (201) exemplary audio, and acquiring evaluation audio of a user, wherein the exemplary audio is audio of specified content that is read by using a specified language;
**characterized in that**,
acquiring (202) a standard pronunciation feature corresponding to the exemplary audio, and extracting (305), from the evaluation audio, an evaluation pronunciation feature corresponding to the standard pronunciation feature based on an encoder of a speech recognition model, wherein the standard pronunciation feature is used to reflect a specific pronunciation of the specified content in the specified language, the standard pronunciation feature corresponding to the exemplary audio is obtained by fusing a plurality of reference pronunciation features, when extracting reference pronunciation features of each piece of reference audio, a preset category of features in each piece of reference audio is collected, and the preset category of features are features representing a change of the overall tone or features representing pronunciations of the entire text or part of the text, each reference pronunciation feature is obtained by using the encoder to extract the preset category of features from each piece of reference audio, a respective piece of reference audio is pre-recorded by using the specified language and the specified content, the exemplary audio is any piece of audio of the reference audio, and the encoder for extracting the pronunciation feature is obtained by performing training on the encoder in the speech recognition model using audio data in plural categories of languages;
determining (203) a feature difference between the standard pronunciation feature and the evaluation pronunciation feature, and determining similarity between the evaluation audio and the exemplary audio according to the feature difference;
mapping the determined similarity to a score, and displaying the score.

2. The language learning method according to claim 1, wherein the determining (203) the feature difference between the standard pronunciation feature and the evaluation pronunciation feature, and determining the similarity between the evaluation audio and the exemplary audio according to the feature difference comprises:
determining (306) a time wrapping function according to the standard pronunciation feature and the evaluation pronunciation feature;
determining (307) a plurality of combinations of alignment points according to the time wrapping function, the standard pronunciation feature and the evaluation pronunciation feature, wherein each combination of alignment points comprises a standard feature point in the standard pronunciation feature and an evaluation feature point in the evaluation pronunciation feature;
determining (308), according to the standard feature point and the evaluation feature point comprised in each combination of alignment points, the feature difference corresponding to each combination of alignment points;
determining (309) the similarity between the evaluation audio and the exemplary audio according to the feature difference of each combination of alignment points.

3. The language learning method according to claim 1, further comprising:
acquiring (310) a mapping function, and configuration information corresponding to the exemplary audio, wherein the configuration information is used to indicate a mapping relationship between a score and similarity which is between the evaluation audio and the exemplary audio;
mapping (311) the similarity between the evaluation audio and the exemplary audio to a score according to the mapping function and the configuration information corresponding to the exemplary audio.

4. The language learning method according to claim 3, wherein the configuration information comprises a maximum score, similarity corresponding to the maximum score, a minimum score, and similarity corresponding to the minimum score.

5. The language learning method according to claim 4, wherein the similarity corresponding to the maximum score is an average value of multiple pieces of reference similarity, and each piece of reference similarity is similarity between each reference pronunciation feature and the standard pronunciation feature.

6. The language learning method according to claim 4, wherein the similarity corresponding to the minimum score is an average value of multiple pieces of white noise similarity, each piece of white noise similarity is similarity between each white noise feature and the standard pronunciation feature, and each white noise feature is obtained by using the encoder to extract a feature from each piece of preset white noise audio.

7. The language learning method according to any one of claims 1 and 3 to 6, before playing (201) the exemplary audio, further comprising:
transmitting (301), in response to a start instruction, a data request instruction to a server;
receiving (302) the encoder, the exemplary audio, the standard pronunciation feature corresponding to the exemplary audio.

8. The language learning method according to any one of claims 1 and 3 to 7, wherein the speech recognition model is obtained by performing training on an initial model using speech recognition data.

9. The language learning method according to any one of claims 1 and 3 to 8, wherein the encoder is a three-layer long short-term memory network.

10. A method for processing a data request instruction, applied to a server, and **characterized in that**, comprises:
receiving (501) the data request instruction;
transmitting (502), according to the data request instruction, an encoder based on a speech recognition model, exemplary audio, and a standard pronunciation feature corresponding to the exemplary audio to a user terminal for performing the method according to claim 1;
wherein the exemplary audio is audio of specified content that is read by using a specified language, and the encoder is used to extract, from evaluation audio, an evaluation pronunciation feature corresponding to the standard pronunciation feature, wherein the standard pronunciation feature is used to reflect a specific pronunciation of the specified content in the specified language.

11. An language learning apparatus (600) for determining speech similarity, comprising:
an acquiring unit (610), configured to play exemplary audio, and acquire evaluation audio of a user, wherein the exemplary audio is audio of specified content that is read by using a specified language;
**characterized in that**,
a feature extraction unit (620), configured to acquire a standard pronunciation feature corresponding to the exemplary audio, and extract, from the evaluation audio, an evaluation pronunciation feature corresponding to the standard pronunciation feature based on an encoder of a speech recognition model, wherein the standard pronunciation feature is used to reflect a specific pronunciation of the specified content in the specified language, the standard pronunciation feature corresponding to the exemplary audio is obtained by fusing a plurality of reference pronunciation features, when extracting reference pronunciation features of each piece of reference audio, a preset category of features in each piece of reference audio is collected, and the preset category of features are features representing a change of the overall tone or features representing pronunciations of the entire text or part of the text, each reference pronunciation feature is obtained by using the encoder to extract the preset category of features from each piece of reference audio, a respective piece of reference audio is pre-recorded by using the specified language and the specified content, and the exemplary audio is any piece of audio of the reference audio, and the encoder for extracting the pronunciation feature is obtained by performing training on the encoder in the speech recognition model using audio data in plural categories of languages;
an analysis unit (630), configured to determine a feature difference between the standard pronunciation feature and the evaluation pronunciation feature, determine similarity between the evaluation audio and the exemplary audio according to the feature difference, map the determined similarity to a score, and display the score.

12. An apparatus (800) for processing a data request instruction, disposed in a server, and **characterized in that**, comprising:
a receiving unit (810), configured to receive the data request instruction;
a transmitting unit (820), configured to transmit, according to the data request instruction, an encoder based on a speech recognition model, exemplary audio, and a standard pronunciation feature corresponding to the exemplary audio to a user terminal according to claim 11;
wherein the exemplary audio is audio of specified content that is read by using a specified language, and the encoder is configured to extract, from evaluation audio, an evaluation pronunciation feature corresponding to the standard pronunciation feature, wherein the standard pronunciation feature is used to reflect a specific pronunciation of the specified content in the specified language.

13. A computer-readable storage medium having, stored thereon, a computer program,
wherein the computer program is executed by a processor to implement the method according to any one of claims 1 to 9 or the method according to claim 10.

## Patentansprüche

1. Sprachlernverfahren zum Bestimmen von Sprachähnlichkeiten basierend auf Sprachinteraktion, umfassend:
Abspielen (201) von Beispielaudio und Erfassen von Bewertungsaudio eines Benutzers, wobei es sich bei dem Beispielaudio um Audio mit festgelegtem Inhalt handelt, das unter Verwendung einer festgelegten Sprache gelesen wird;
**dadurch gekennzeichnet, dass**
Erfassen (202) eines dem Beispielaudio entsprechenden Standardaussprachemerkmals und Extrahieren (305) eines dem Standardaussprachemerkmal entsprechenden Bewertungsaussprachemerkmals aus dem Bewertungsaudio basierend auf einem Encoder eines Spracherkennungsmodells, wobei das Standardaussprachemerkmal verwendet wird, um eine bestimmte Aussprache des festgelegten Inhalts in der festgelegten Sprache wiederzugeben, das dem Beispielaudio entsprechende Standardaussprachemerkmal durch Zusammenführen einer Vielzahl von Referenzaussprachemerkmalen erhalten wird, beim Extrahieren der Referenzaussprachemerkmale jedes Referenzaudioelements eine voreingestellte Merkmalskategorie in jedem Referenzaudioelement erfasst wird und die voreingestellte Merkmalskategorie Merkmale, die eine Änderung des Gesamttons darstellen, oder Merkmale sind, die Aussprache des gesamten Textes oder eines Teils des Textes darstellen, jedes Referenzaussprachemerkmal durch Extrahieren der voreingestellten Merkmalskategorie aus jedem Referenzaudioelement mit dem Encoder erhalten wird, ein jeweiliges Referenzaudioelement unter Verwendung der festgelegten Sprache und des festgelegten Inhalts vorab aufgezeichnet wird, das Beispielaudio ein beliebiges Audioelement des Referenzaudioelements ist und der Encoder zum Extrahieren des Aussprachemerkmals durch Durchführen eines Trainings des Encoders im Spracherkennungsmodell unter Verwendung von Audiodaten mehrerer Sprachkategorien erhalten wird;
Bestimmen (203) eines Merkmalsunterschieds zwischen dem Standardaussprachemerkmal und dem Bewertungsaussprachemerkmal und Bestimmen einer Ähnlichkeit zwischen dem Bewertungsaudio und dem Beispielaudio gemäß dem Merkmalsunterschied;
Zuordnen der bestimmten Ähnlichkeit zu einer Punktzahl und Anzeigen der Punktzahl.

2. Sprachlernverfahren nach Anspruch 1, wobei das Bestimmen (203) des Merkmalsunterschieds zwischen dem Standardaussprachemerkmal und dem Bewertungsaussprachemerkmal und Bestimmen der Ähnlichkeit zwischen dem Bewertungsaudio und dem Beispielaudio gemäß dem Merkmalsunterschied umfasst:
Bestimmen (306) einer Zeitumbruchfunktion gemäß dem Standardaussprachemerkmal und dem Bewertungsaussprachemerkmal;
Bestimmen (307) einer Vielzahl von Kombinationen von Ausrichtungspunkten gemäß der Zeitumbruchfunktion, dem Standardaussprachemerkmal und dem Bewertungsaussprachemerkmal, wobei jede Kombination von Ausrichtungspunkten einen Standardmerkmalspunkt im Standardaussprachemerkmal und einen Bewertungsmerkmalspunkt im Bewertungsaussprachemerkmal umfasst;
Bestimmen (308) des Merkmalunterschieds, der jeder Kombination von Ausrichtungspunkten entspricht, gemäß dem Standardmerkmalspunkt und dem Bewertungsmerkmalspunkt, die in jeder Kombination von Ausrichtungspunkten umfasst sind;
Bestimmen (309) der Ähnlichkeit zwischen dem Bewertungsaudio und dem Beispielaudio entsprechend dem Merkmalsunterschied jeder Kombination von Ausrichtungspunkten.

3. Sprachlernverfahren nach Anspruch 1, das weiter umfasst:
Erfassen (310) einer Zuordnungsfunktion und von Konfigurationsinformationen, die dem Beispielaudio entsprechen, wobei die Konfigurationsinformationen verwendet werden, um eine Zuordnungsbeziehung zwischen einer Punktzahl und einer Ähnlichkeit anzugeben, die zwischen dem Bewertungsaudio und dem Beispielaudio besteht;
Zuordnen (311) der Ähnlichkeit zwischen dem Bewertungsaudio und dem Beispielaudio zu einer Punktzahl gemäß der Zuordnungsfunktion und den dem Beispielaudio entsprechenden Konfigurationsinformationen.

4. Sprachlernverfahren nach Anspruch 3, wobei die Konfigurationsinformationen eine Höchstpunktzahl, eine der Höchstpunktzahl entsprechende Ähnlichkeit, eine Mindestpunktzahl und eine der Mindestpunktzahl entsprechende Ähnlichkeit umfassen.

5. Sprachlernverfahren nach Anspruch 4, wobei die Ähnlichkeit, die der Höchstpunktzahl entspricht, ein Durchschnittswert mehrerer Referenzähnlichkeiten ist und jede Referenzähnlichkeit eine Ähnlichkeit zwischen jedem Referenzaussprachemerkmal und dem Standardaussprachemerkmal ist.

6. Sprachlernverfahren nach Anspruch 4, wobei die der Mindestpunktzahl entsprechende Ähnlichkeit ein Durchschnittswert mehrerer Elemente weißer Rauschähnlichkeit ist, jedes Element weißer Rauschähnlichkeit eine Ähnlichkeit zwischen jedem Merkmal weißen Rauschens und dem Standardaussprachemerkmal ist und jedes Merkmal weißen Rauschens erhalten wird, indem der Encoder verwendet wird, um ein Merkmal aus jedem Audioelement voreingestellten weißen Rauschens zu extrahieren.

7. Sprachlernverfahren nach einem der Ansprüche 1 und 3 bis 6, das vor dem Abspielen (201) des Beispielaudios weiter umfasst:
Übertragen (301) einer Datenanforderungsanweisung an einen Server als Reaktion auf eine Startanweisung;
Empfangen (302) des Encoders, des Beispielaudios, des dem Beispielaudio entsprechenden Standardaussprachemerkmals.

8. Sprachlernverfahren nach einem der Ansprüche 1 und 3 bis 7, wobei das Spracherkennungsmodell durch Durchführen eines Trainings eines Ausgangsmodells unter Verwendung von Spracherkennungsdaten erhalten wird.

9. Sprachlernverfahren nach einem der Ansprüche 1 und 3 bis 8, wobei der Encoder ein dreischichtiges Langzeit-Kurzzeitgedächtnisnetzwerk ist.

10. Verfahren zum Verarbeiten einer Datenanforderungsanweisung, das auf einen Server angewendet wird und **dadurch gekennzeichnet ist, dass** es Folgendes umfasst:
Empfangen (501) der Datenanforderungsanweisung;
Übertragen (502) eines auf einem Spracherkennungsmodell basierenden Encoders, eines Beispielaudios und eines dem Beispielaudio entsprechenden Standardaussprachemerkmals gemäß der Datenanforderungsanweisung an ein Benutzerendgerät zum Durchführen des Verfahrens nach Anspruch 1;
wobei es sich bei dem Beispielaudio um Audio mit festgelegtem Inhalt handelt, das unter Verwendung einer festgelegten Sprache gelesen wird, und wobei der Encoder verwendet wird, um aus Bewertungsaudio ein Bewertungsaussprachemerkmal zu extrahieren, das dem Standardaussprachemerkmal entspricht,
wobei die Standardaussprachefunktion verwendet wird, um eine bestimmte Aussprache des festgelegten Inhalts in der festgelegten Sprache wiederzugeben.

11. Sprachlerneinrichtung (600) zum Bestimmen von Sprachähnlichkeit, umfassend:
eine Erfassungseinheit (610), die dazu konfiguriert ist, Beispielaudio abzuspielen und Bewertungsaudio eines Benutzers zu erfassen, wobei das Beispielaudio Audio mit festgelegtem Inhalt ist, das unter Verwendung einer festgelegten Sprache gelesen wird;
**dadurch gekennzeichnet, dass**
eine Merkmalsextraktionseinheit (620), die dazu konfiguriert ist, ein dem Beispielaudio entsprechendes Standardaussprachemerkmal zu erfassen und aus dem Bewertungsaudio basierend auf einem Encoder eines Spracherkennungsmodells ein dem Standardaussprachemerkmal entsprechendes Bewertungsaussprachemerkmal zu extrahieren, wobei das Standardaussprachemerkmal verwendet wird, um eine bestimmte Aussprache des festgelegten Inhalts in der festgelegten Sprache wiederzugeben, das dem Beispielaudio entsprechende Standardaussprachemerkmal durch Zusammenführen einer Vielzahl von Referenzaussprachemerkmalen erhalten wird, beim Extrahieren der Referenzaussprachemerkmale jedes Referenzaudioelements eine voreingestellte Merkmalskategorie in jedem Referenzaudioelement erfasst wird und die voreingestellte Merkmalskategorie Merkmale, die eine Änderung des Gesamttons darstellen, oder Merkmale sind, die Aussprache des gesamten Textes oder eines Teils des Textes darstellen, jedes Referenzaussprachemerkmal durch Extrahieren der voreingestellten Merkmalskategorie aus jedem Referenzaudioelement mit dem Encoder erhalten wird, ein jeweiliges Referenzaudioelement unter Verwendung der festgelegten Sprache und des festgelegten Inhalts vorab aufgezeichnet wird und das Beispielaudio ein beliebiges Audioelement des Referenzaudioelements ist und der Encoder zum Extrahieren des Aussprachemerkmals durch Durchführen eines Trainings des Encoders im Spracherkennungsmodell unter Verwendung von Audiodaten mehrerer Sprachkategorien erhalten wird;
eine Analyseeinheit (630), die dazu konfiguriert ist, einen Merkmalsunterschied zwischen dem Standardaussprachemerkmal und dem Bewertungsaussprachemerkmal zu bestimmen, Ähnlichkeit zwischen dem Bewertungsaudio und dem Beispielaudio gemäß dem Merkmalsunterschied zu bestimmen, die bestimmte Ähnlichkeit einer Punktzahl zuzuordnen und die Punktzahl anzuzeigen.

12. Einrichtung (800) zum Verarbeiten einer Datenanforderungsanweisung, die in einem Server angeordnet ist und **dadurch gekennzeichnet ist, dass** sie Folgendes umfasst:
eine Empfangseinheit (810), die zum Empfangen der Datenanforderungsanweisung konfiguriert ist;
eine Übertragungseinheit (820), die dazu konfiguriert ist, gemäß der Datenanforderungsanweisung einen auf einem Spracherkennungsmodell basierenden Encoder, Beispielaudio und ein dem Beispielaudio entsprechendes Standardaussprachemerkmal an ein Benutzerendgerät nach Anspruch 11 zu übertragen;
wobei es sich bei dem Beispielaudio um Audio mit festgelegtem Inhalt handelt, der unter Verwendung einer festgelegten Sprache gelesen wird, und der Encoder so konfiguriert ist, dass er aus Bewertungsaudio ein Bewertungsaussprachemerkmal extrahiert, das dem Standardaussprachemerkmal entspricht, wobei das Standardaussprachemerkmal verwendet wird, um eine bestimmte Aussprache des festgelegten Inhalts in der festgelegten Sprache wiederzugeben.

13. Computerlesbares Speichermedium, auf dem ein Computerprogramm gespeichert ist,
wobei das Computerprogramm von einem Prozessor ausgeführt wird, um das Verfahren nach einem der Ansprüche 1 bis 9 oder das Verfahren nach Anspruch 10 umzusetzen.

## Revendications

1. Procédé d'apprentissage d'une langue pour déterminer la similitude de parole sur la base d'une interaction vocale, comprenant :
la lecture (201) d'un audio donné à titre d'exemple et l'obtention d'un audio d'évaluation d'un utilisateur, l'audio donné à titre d'exemple est un audio d'un contenu spécifié qui est lu en utilisant une langue spécifiée ;
**caractérisé en ce que**
l'obtention (202) d'une caractéristique de prononciation standard correspondant à l'audio donné à titre d'exemple, et l'extraction (305), à partir de l'audio d'évaluation, d'une caractéristique de prononciation d'évaluation correspondant à la caractéristique de prononciation standard basée sur un encodeur d'un modèle de reconnaissance vocale, dans lequel la caractéristique de prononciation standard est utilisée pour refléter une prononciation spécifique du contenu spécifié dans la langue spécifiée, la caractéristique de prononciation standard correspondant à l'audio donné à titre d'exemple est obtenue en fusionnant une pluralité de caractéristiques de prononciation de référence lors de l'extraction de caractéristiques de prononciation de référence de chaque morceau audio de référence, une catégorie prédéfinie de caractéristiques dans chaque morceau audio de référence est collectée, et la catégorie prédéfinie de caractéristiques est constituée de caractéristiques représentant un changement de ton général ou de caractéristiques représentant des prononciations du texte entier ou d'une partie du texte, chaque caractéristique de prononciation de référence est obtenue en utilisant l'encodeur pour extraire la catégorie prédéfinie de caractéristiques de chaque morceau audio de référence, un morceau audio de référence respectif est préenregistré en utilisant la langue et le contenu spécifiés, l'audio donné à titre d'exemple est n'importe quel morceau audio de l'audio de référence, et l'encodeur destiné à extraire la caractéristique de prononciation est obtenu en effectuant un apprentissage sur l'encodeur dans le modèle de reconnaissance vocale en utilisant des données audio dans plusieurs catégories de langues ;
la détermination (203) d'une différence de caractéristique entre la caractéristique de prononciation standard et la caractéristique de prononciation d'évaluation, et la détermination d'une similitude entre l'audio d'évaluation et l'audio donné à titre d'exemple en fonction de la différence de caractéristique ;
le mappage de la similitude déterminée à un score et l'affichage du score.

2. Procédé d'apprentissage d'une langue selon la revendication 1, dans lequel la détermination (203) de la différence de caractéristique entre la caractéristique de prononciation standard et la caractéristique de prononciation d'évaluation, et la détermination de la similitude entre l'audio d'évaluation et l'audio donné à titre d'exemple en fonction de la différence de caractéristique comprennent :
la détermination (306) d'une fonction d'enveloppement temporel en fonction de la caractéristique de prononciation standard et la caractéristique de prononciation d'évaluation ;
la détermination (307) d'une pluralité de combinaisons de points d'alignement en fonction de la fonction d'enveloppement temporel, de la caractéristique de prononciation standard et de la caractéristique de prononciation d'évaluation, dans lequel chaque combinaison de points d'alignement comprend un point de caractéristique standard dans la caractéristique de prononciation standard et un point de caractéristique d'évaluation dans la caractéristique de prononciation d'évaluation ;
la détermination (308), en fonction du point de caractéristique standard et du point de caractéristique d'évaluation compris dans chaque combinaison de points d'alignement, de la différence de caractéristiques correspondant à chaque combinaison de points d'alignement;
la détermination (309) de la similitude entre l'audio d'évaluation et l'audio donné à titre d'exemple en fonction de la différence de caractéristiques de chaque combinaison de points d'alignement.

3. Procédé d'apprentissage d'une langue selon la revendication 1, comprenant en outre :
l'obtention (310) d'une fonction de mappage et d'informations de configuration correspondant à l'audio donné à titre d'exemple, dans lequel les informations de configuration sont utilisées pour indiquer une relation de mappage entre un score et une similitude qui se situe entre l'audio d'évaluation et l'audio donné à titre d'exemple ;
le mappage (311) de la similitude entre l'audio d'évaluation et l'audio donné à titre d'exemple à un score en fonction de la fonction de mappage et des informations de configuration correspondant à l'audio donné à titre d'exemple.

4. Procédé d'apprentissage d'une langue selon la revendication 3, dans lequel les informations de configuration comprennent un score maximum, une similitude correspondant au score maximum, un score minimum et une similitude correspondant au score minimum.

5. Procédé d'apprentissage d'une langue selon la revendication 4, dans lequel la similitude correspondant au score maximum est une valeur moyenne de plusieurs éléments de similitude de référence, et chaque élément de similitude de référence est une similitude entre chaque caractéristique de prononciation de référence et la caractéristique de prononciation standard.

6. Procédé d'apprentissage d'une langue selon la revendication 4, dans lequel la similitude correspondant au score minimum est une valeur moyenne de plusieurs éléments de similitude de bruit blanc, chaque élément de similitude de bruit blanc est une similitude entre chaque caractéristique de bruit blanc et la caractéristique de prononciation standard, et chaque caractéristique de bruit blanc est obtenue en utilisant l'encodeur pour extraire une caractéristique de chaque morceau audio de bruit blanc prédéfini.

7. Procédé d'apprentissage d'une langue selon l'une quelconque des revendications 1 et 3 à 6, avant la lecture (201) de l'audio donné à titre d'exemple, comprenant en outre :
la transmission (301), en réponse à une instruction de démarrage, d'une instruction de demande de données à un serveur ;
la réception (302) de l'encodeur, l'audio donné à titre d'exemple, la fonction de prononciation standard correspondant à l'audio donné à titre d'exemple.

8. Procédé d'apprentissage d'une langue selon l'une quelconque des revendications 1 et 3 à 7, dans lequel le modèle de reconnaissance vocale est obtenu en effectuant un apprentissage sur un modèle initial en utilisant des données de reconnaissance vocale.

9. Procédé d'apprentissage d'une langue selon l'une quelconque des revendications 1 et 3 à 8, dans lequel l'encodeur est un réseau de longue mémoire à court terme à trois couches.

10. Procédé de traitement d'une instruction de demande de données, appliqué à un serveur, et **caractérisé en ce qu'**il comprend :
la réception (501) de l'instruction de demande de données ;
la transmission (502), en fonction de l'instruction de demande de données, d'un codeur sur la base d'un modèle de reconnaissance vocale, d'un audio donné à titre d'exemple et d'une caractéristique de prononciation standard correspondant à l'audio donné à titre d'exemple à un terminal utilisateur pour réaliser le procédé selon la revendication 1 ;
dans lequel l'audio donné à titre d'exemple est un audio d'un contenu spécifié qui est lu en utilisant une langue spécifiée, et l'encodeur est utilisé pour extraire, à partir de l'audio d'évaluation, une caractéristique de prononciation d'évaluation correspondant à la caractéristique de prononciation standard,
dans lequel la caractéristique de prononciation standard est utilisée pour refléter une prononciation spécifique du contenu spécifié dans la langue spécifiée.

11. Appareil d'apprentissage d'une langue (600) permettant de déterminer la similitude de parole, comprenant :
une unité d'acquisition (610), configurée pour lire un audio donné à titre d'exemple et obtenir un audio d'évaluation d'un utilisateur, dans lequel l'audio donné à titre d'exemple est un audio d'un contenu spécifié qui est lu en utilisant une langue spécifiée ;
**caractérisé en ce que**
une unité d'extraction de caractéristiques (620), configurée pour obtenir une caractéristique de prononciation standard correspondant à l'audio donné à titre d'exemple, et extraire, de l'audio d'évaluation, une caractéristique de prononciation d'évaluation correspondant à la caractéristique de prononciation standard sur la base d'un encodeur d'un modèle de reconnaissance vocale, dans lequel la caractéristique de prononciation standard est utilisée pour refléter une prononciation spécifique du contenu spécifié dans la langue spécifiée, la caractéristique de prononciation standard correspondant à l'audio donné à titre d'exemple est obtenue par fusion d'une pluralité de caractéristiques de prononciation de référence lors de l'extraction de caractéristiques de prononciation de référence de chaque morceau audio de référence, une catégorie prédéfinie de caractéristiques dans chaque morceau audio de référence est collectée, et la catégorie prédéfinie de caractéristiques sont des caractéristiques représentant un changement de ton général ou des caractéristiques représentant des prononciations du texte entier ou d'une partie du texte, chaque caractéristique de prononciation de référence est obtenue en utilisant l'encodeur pour extraire la catégorie prédéfinie de caractéristiques de chaque morceau audio de référence, un morceau audio de référence respectif est préenregistré en utilisant la langue et le contenu spécifiés, et l'audio donné à titre d'exemple est n'importe quel morceau audio de l'audio de référence, et l'encodeur permettant d'extraire la caractéristique de prononciation est obtenu en effectuant l'apprentissage sur l'encodeur dans le modèle de reconnaissance vocale en utilisant des données audio dans plusieurs catégories de langues ;
une unité d'analyse (630), configurée pour déterminer une différence de caractéristique entre la caractéristique de prononciation standard et la caractéristique de prononciation d'évaluation, la détermination de la similitude entre l'audio d'évaluation et l'audio donné à titre d'exemple en fonction de la différence de caractéristique, le mappage de la similitude déterminée à un score et l'affichage du score.

12. Appareil (800) de traitement d'une instruction de demande de données, disposé dans un serveur, et **caractérisé en ce qu'**il comprend :
une unité de réception (810), configurée pour recevoir l'instruction de demande de données ;
une unité de transmission (820), configurée pour transmettre, en fonction de l'instruction de demande de données, un encodeur sur la base d'un modèle de reconnaissance vocale, un audio donné à titre d'exemple et une caractéristique de prononciation standard correspondant à l'audio donné à titre d'exemple à un terminal utilisateur selon la revendication 11 ;
dans lequel l'audio donné à titre d'exemple est un audio d'un contenu spécifié qui est lu en utilisant une langue spécifiée, et l'encodeur est configuré pour extraire, à partir de l'audio d'évaluation, une caractéristique de prononciation d'évaluation correspondant à la caractéristique de prononciation standard, dans lequel la caractéristique de prononciation standard est utilisée pour refléter une prononciation spécifique du contenu spécifié dans la langue spécifiée.

13. Support de stockage lisible par ordinateur sur lequel est stocké un programme informatique,
dans lequel le programme informatique est exécuté par un processeur afin d'implémenter le procédé selon l'une quelconque des revendications 1 à 9 ou le procédé selon la revendication 10.
